# EUROPEAN PATENT SPECIFICATION

(11) **EP 3 840 993 B1**
(45) Date of publication and mention of the grant of the patent: **01.11.2023**
(21) Application number: 18765574.1
(22) Date of filing: 24.08.2018
(51) Int. Cl.: B60T 15/36

(54) **PNEUMATIC BRAKE CONTROL MODULE COMPONENTS**
KOMPONENTEN EINES DRUCKLUFTBREMSSTEUERMODULS
COMPOSANTS DE MODULE DE COMMANDE DE FREIN PNEUMATIQUE

(43) Date of publication of application: 30.06.2021
(73) Proprietor: ZF CV Systems Europe BV, 1170 Brussels (BE)
(72) Inventor: COUPPEE, Ulrich, 31863 Coppenbrügge (DE); FESZCZUK, Witold, 55-065 Jordanow Sl. (PL); GRZESKOWIAK, Adrian, 60-462 Poznan (PL); HYZOPSKI, Krzysztof, 54-129 Wroclaw (PL); SMARDZ, Marek, 67-400 Wschowa (PL); WUJEC, Arkadiusz, 54-032 Wroclaw (PL)
(74) Representative: Ohlendorf, Henrike
(86) International application number: PCT/EP2018/072839
(87) International publication number: WO 2020/038585

(56) References cited:
- WO-A1-2017/157500
- US-A1- 2013 263 953
- US-A1- 2016 251 008
- US-A1- 2018 001 877

## Description

### Technical Field

The present invention relates to components of a pneumatic brake control module.

Particularly, the present invention relates to components of an electro-pneumatic trailer-brake control module.

### Background Art

WO 2016/012063 A1 discloses a pneumatic brake-control valve. The valve comprises a housing with a movable first plate valve which is arranged on a carrier within a lower part of the housing. The pneumatic control valve further comprises a second movable plate valve which is arranged on a venting piece. The second plate valve has a venting passage led out from the lower housing part.

US 2013/263953 A1 relates to a valve assembly, particularly, but not exclusively, to a valve assembly typically known as a modulator for use in a fluid pressure operated vehicle braking system.

US 2018/001877 A1 relates to a brake modulator for a compressed air braking system of a vehicle, wherein the brake modulator comprises a main housing in the form of a light alloy die-casting and two relay valves arranged in the main housing in an axial direction of the main housing.

### Disclosure of Invention

The present invention provides a pneumatic brake control module, a method of manufacturing a component for a pneumatic brake control module and the component manufactured by the method.

The pneumatic brake control module comprises a housing with a first inlet port for supplying compressed air to the module and a first outlet port for feeding the compressed air to a brake control line. The module further comprises a first piston and a second piston arranged within the housing and movable relative to each other. The module further comprises a pneumatic valve for actuating the first piston.

The actuated first piston opens a plate valve within the second piston against a restoring force of a spring element. The open plate valve connects the first inlet port and the first outlet port. By disengaging the plate valve and the first piston, compressed air can be exhausted from the brake control line.

The second piston comprises a first tubular part and a second tubular part. The first tubular part provides a support for a telescopic structure in which the spring element is embedded. The second tubular part provides an end stop for a tubular element of the telescopic structure. The first tubular part is snap-fitted to the second tubular part. Preferably, the snap-fit is secured by the housing.

In this regard, the term "pneumatic brake control module", as used throughout the description and the claims, particularly refers to a module (i.e., a set of assembled components) that allows controlling a flow of compressed air to actuate or release a friction brake of a vehicle. For example, when an actuation of a brake pedal causes a pneumatic or an electric braking signal, the module may feed compressed air to the control line to the effect that a relay valve (connected to an air reservoir of the vehicle) opens a fluidic connection between the air reservoir and a brake cylinder of the friction brake. Likewise, when the pneumatic or electric braking signal ceases, the module may exhaust compressed air from the control line to the effect that a relay valve (connected to an air reservoir of the vehicle) closes the fluidic connection between the air reservoir and the brake cylinder of the friction brake. Notably, the strength of the braking force may be infinitely variable by adjusting the pressure carried over the control line.

The pneumatic (or electro-pneumatic) brake control module may be used to control a braking force of the vehicle in which the brake control module is arranged but may also control a braking force of a vehicle which is towed by said vehicle. I.e., the term "pneumatic brake control module", as used throughout the description and the claims, also encompasses electro-pneumatic trailer-brake control modules or simply a pneumatic valve used for controlling trailer brakes. In this regard, the term "trailer", as used throughout the description, particularly refers to vehicles that are towed by another vehicle (e.g., a truck) during operation. In an embodiment, the pneumatic (or electro-pneumatic) brake control module is part of a trailer control unit.

The term "housing", as used throughout the description and the claims, particularly refers to a casing that is to protect the electric and/or pneumatic components of the module. The casing may be provided with fastening means (screw holes, snap-fits, etc.) for fastening the module to a frame of the vehicle (in which the brake control module is arranged). Notably, the housing of a trailer-brake control module may be arranged in the towing vehicle, whereas the pneumatic components controlled by the module (e.g., the relay valve and the air reservoir) may be arranged in the trailer. The housing, for instance, can be manufactured by the process of casting or moulding.

The term "inlet/outlet port", as used throughout the description and the claims, particularly refers to an opening in the housing provided with a connector (fitting) for connecting the opening to a pneumatic hose. Furthermore, the term "compressed air", as used throughout the description and the claims, particularly refers to air at a pressure which is above the atmospheric pressure (e.g., 8.5 Bar above the atmospheric pressure). Notably, while the terms "inlet" and "outlet" suggest a unidirectional flow, said terms are primarily used to differentiate between ports and merely serve to indicate a direction of signal flow, which may correspond to a direction of fluid flow occurring under specific conditions. For instance, while compressed air may be fed through the outlet port to the control line while braking, exhausting the control line may require that compressed air flows through the outlet port back into the module. Nevertheless, the signal flow remains downstream, e.g., from the brake pedal to the module and from the module to the friction brake.

The term "brake control line", as used throughout the description and the claims, particularly refers to a pneumatic hose, wherein the braking force can be (directly or indirectly) controlled by controlling the pressure within said pneumatic hose. For example, the brake control line may be connected to a brake cylinder of a friction brake, or a relay valve that controls a fluidic connection between an air reservoir and the brake cylinder. Moreover, the term "piston", as used throughout the description and the claims, particularly refers to a component which is movable within a housing but (despite being movable) allows preventing that air enters or exits a chamber that becomes smaller/larger as a result of the movement, via a passage between the component and the housing wall (or through the component). For example, the piston may comprise one or more circumferential seals which prevent that air flows freely between both sides of the piston but allow that the piston slides along the wall of the housing.

The term "valve", as used throughout the description and the claims, particularly refers to a pneumatic component which allows controlling the flow of compressed air by actuation. For example, an electric signal fed to an electro-pneumatic valve may cause an actuator to open or close the valve. Moreover, the term "plate valve", as used throughout the description and the claims, particularly refers to a valve which is closed by pressing a disc or ring (valve plate) against an end stop (valve seat). The term "telescopic structure", as used throughout the description and the claims, particularly refers to a structure with an inner element that can (at least partially) be slid into an outer element, thereby decreasing the size of the structure. The term "snap-fit", as used throughout the description and the claims, particularly refers to an assembly process where a component is assembled by pushing interlocking features of elements (forming the component) over each other. Snap-fitting the tubular parts facilitate assembling and as the snap-fit is secured by the housing once the component is inserted, a risk of an involuntary re-opening of the snap-fit can be avoided.

The pneumatic brake control module may further comprise extended guide members rising from the first tubular part. The housing may further comprise a support structure provided between the first and second piston and a second inlet port for parking brake control, wherein compressed air fed to the second inlet port causes a motion of the second piston relative to the support structure to disengage the mechanical valve from the first piston, if the first piston is not actuated by the pneumatic valve.

The support structure may be inserted into the housing as a third piston which may then be locked such that it is no longer movable relative to the housing.

This may facilitate assembling the module, as it allows inserting one piston after the other into the housing from one side.

The spring element may be embedded between the first tubular element and a second tubular element of the telescopic structure, wherein the second tubular element can be slid into the first tubular element against the restoring force of the spring.

Hence, a side of the first tubular element may form the valve plate of the plate valve and a side of the first piston may form the valve seat of the plate valve. For example, the side of the piston may have a disc or ring-shaped surface that may engage with the ring-shaped surface of the valve plate formed by the first tubular element (when the plate valve is closed).

Compressed air can be exhausted from the brake control line through the tubular elements.

I.e., when the first piston is disengaged from the ring-shaped surface of the valve plate formed by the first tubular element, air may flow through the first tubular element.

The first tubular part of the second piston comprises an outer wall with a circumferential groove. The circumferential groove may have a U-shaped profile.

The circumferential groove may have a radially bent concave surface with a rose-spike-like shape that has a first portion with a first curvature and a second portion with a second curvature, wherein the second curvature has a second radius that differs from a first radius of the first curvature.

Accordingly, manufacturing the first tubular part may be facilitated. For example, the first tubular part may be manufactured as one piece (e.g., by molding).

The second tubular part of the second piston may comprise a plurality of flexible arms surrounding a portion of the first tubular part of the second piston. The pneumatic brake control module may further comprise first ribs provided behind the flexible arms. The pneumatic brake control module may further comprise second ribs provided in between the flexible arms, wherein the second ribs are designed to be irreversibly deformed during assemblage to temporarily reduce mechanical stress.

The flexible arms may comprise snap-fits that extend into the circumferential groove. The snap-fits may have a radially bent concave surface with a rose-spike-like shape that has a first portion with a third curvature and a second portion with a fourth curvature, wherein the fourth curvature has a fourth radius that differs from a third radius of the third curvature.

Hence, the first tubular part and the second tubular part may be assembled by simply pushing both parts together. Due to the pushing force, the flexible arms bend outwardly and once the snap-fits slip into the groove, snap-back inwardly.

The housing may inhibit a movement of the snap-fits in a radial direction.

For example, once inserted into the housing, bending the snap fits and/or the flexible arms outwardly may be inhibited by the housing wall.

The first tubular part of the second piston may comprise a first ring-shaped section and a second ring-shaped section, wherein both ring-shaped sections are divided in an axial direction by the circumferential groove.

For example, the first ring-shaped section (of the first tubular part of the second piston) may accommodate a portion of the second tubular element, whereas the second ring-shaped section (of the first tubular part of the second piston) may be adjacent to the housing wall.

The second tubular part of the second piston may comprise a first ring-shaped section extending into the support structure provided between the first piston and the second piston and a second ring-shaped section having a larger diameter than said first ring-shaped section, wherein the housing inhibits a radial movement of the second ring-shaped section.

A longitudinal axis of an arm may extend form said second ring-shaped section (of the second tubular part of the second piston) in parallel to an/the axial direction.

In accordance with an embodiment, a method of manufacturing a pneumatic brake control module is disclosed. Said method comprises molding a first tubular part, molding a second tubular part, and arranging a telescopic structure with an embedded spring element between the first tubular part and the second tubular part. The first tubular part provides a support for the telescopic structure and the second tubular part provides an end stop for a tubular element of the telescopic structure. The method further comprises snap-fitting the first tubular part to the second tubular part by a plurality of flexible arms that extend form a ring-shaped section of the second tubular part and surround a portion of the first tubular part.

Hence, the component manufactured in accordance with the method comprises at least a first tubular part, a second tubular part, and a telescopic structure with an embedded spring element between the first tubular part and the second tubular part, wherein the first tubular part provides a support for the telescopic structure and the second tubular part provides an end stop for a tubular element of the telescopic structure. The first tubular part is snap-fitted to the second tubular part by a plurality of flexible arms that extend form a ring-shaped section of the second tubular part and surround a portion of the first tubular part.

Snap-fitting the first tubular part to the second tubular part may comprise engaging the arms with a circumferential groove in an outer wall of the first tubular part. The circumferential groove may have a U-shaped profile.

It will be appreciated that the features and attendant advantages of the disclosed module/component may be realized by the disclosed method and vice versa. Moreover, it is noted that throughout the description, features in brackets are to be regarded as optional.

### Brief Description of Drawings

The foregoing aspects and many of the attendant advantages will become more readily appreciated as the same becomes better understood by reference to the following detailed description, when taken in conjunction with the accompanying drawings, wherein like reference numerals refer to like parts throughout the various views, unless otherwise specified.
Fig. 1a shows a perspective view of an exemplary first tubular part;
Fig. 1b shows another perspective view of the first tubular part of Fig. 1a;
Fig. 1c shows a modification of the first tubular part of Fig. 1a and Fig. 1b;
Fig. 2a shows a perspective view of an exemplary second tubular part;
Fig. 2b shows another perspective view of the second tubular part of Fig. 2a;
Fig. 2c shows a modification of the second tubular part of Fig. 2a and Fig. 2b;
Fig. 3 shows a perspective view of the snap-fitted exemplary first and second tubular parts;
Fig. 3a illustrates the curvature of surfaces of the snap-fitted exemplary first and second tubular parts;
Fig. 4 shows a cross-sectional view of components of an exemplary brake control module;
Fig. 4a-4d illustrate the operation of the brake control module of Fig. 4; and
Fig. 5 shows a flow-chart of a method of manufacturing a component for a pneumatic brake control module.

Notably, the drawings are primarily intended to conceptually illustrate the present invention.

### Modes for Carrying Out the Invention

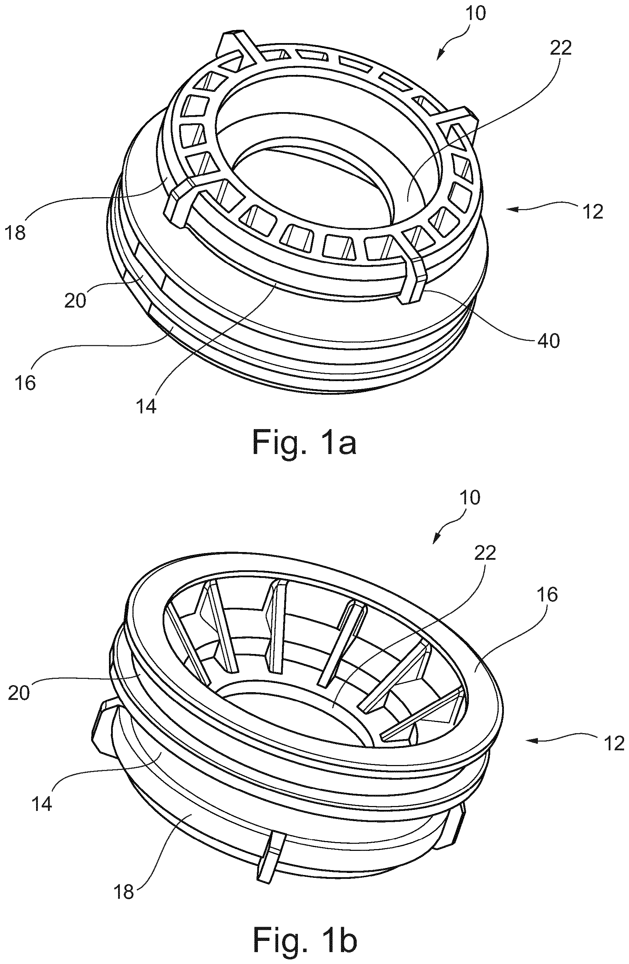

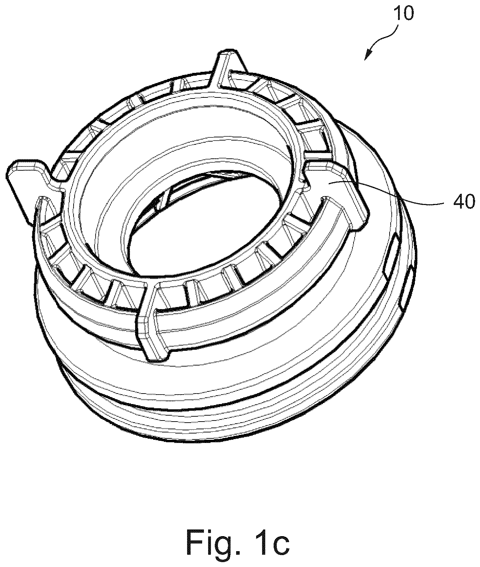

Fig. 1a and Fig. 1b show an exemplary first tubular part 10. The first tubular part 10 comprises an outer wall 12 with a circumferential groove 14 that separates a first ring-shaped section 16 from a second ring-shaped section 18. The first ring-shaped section 16 has a U-shaped circumferential groove 20 at its outer side. The inner surface of the second ring-shaped section 18 surrounds a cylindrical compartment. The cylindrical compartment is connected through a circular neck 22 extending inwardly from the circumferential groove 20, to a space bounded by the inner surface of the first ring-shaped section 16. In accordance with an exemplary embodiment, as shown in Fig. 1c, the guide members 40 (fins) that extend further from the second ring-shaped section 18 (c.f. Fig. 1a or 1b) of the first tubular part 10 in the axial direction are provided to facilitate assemblage.

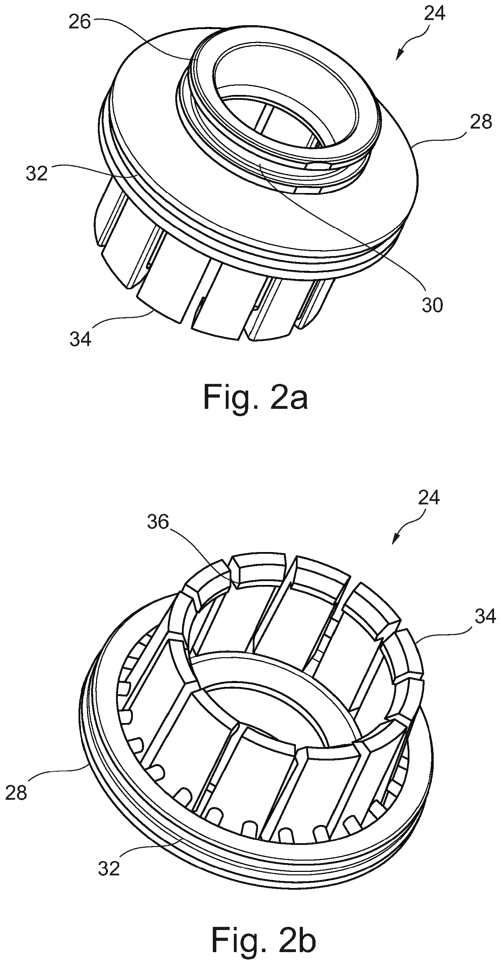

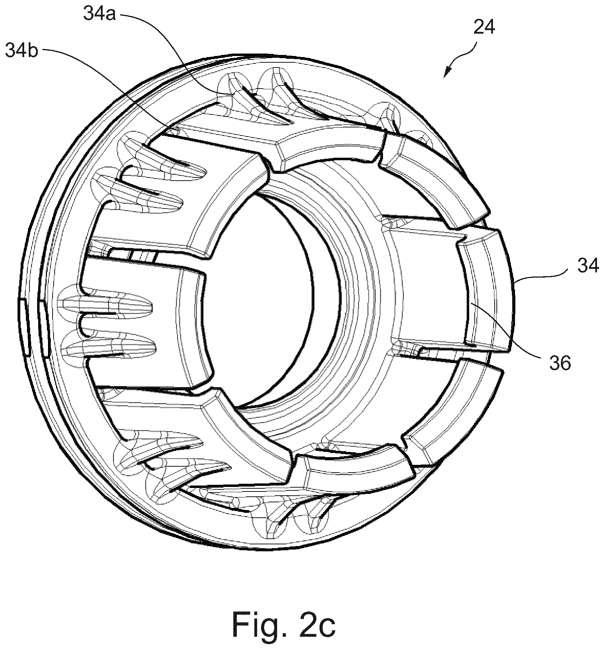

Fig. 2a and Fig. 2b show an exemplary second tubular part 24. The second tubular part 24 comprises a first ring-shaped section 26 and a second ring-shaped section 28. The first ring-shaped section 26 and the second ring-shaped section 28, which has a larger diameter than the first ring-shaped section 26, have circumferential grooves 30, 32 at their outer sides. The second tubular part 24 further comprises a plurality of flexible arms 34 which extend axially form the second ring-shaped section 28. The arms 34 are provided with snap-fits 36 that extend radially inwards. As shown in Fig. 2c, first ribs 34a may be provided behind the flexible arms 34 to increase their structural robustness. In addition, second ribs 34b that are designed to be irreversibly deformed during assemblage to temporarily reduce mechanical stress may be provided in between the flexible arms 34.

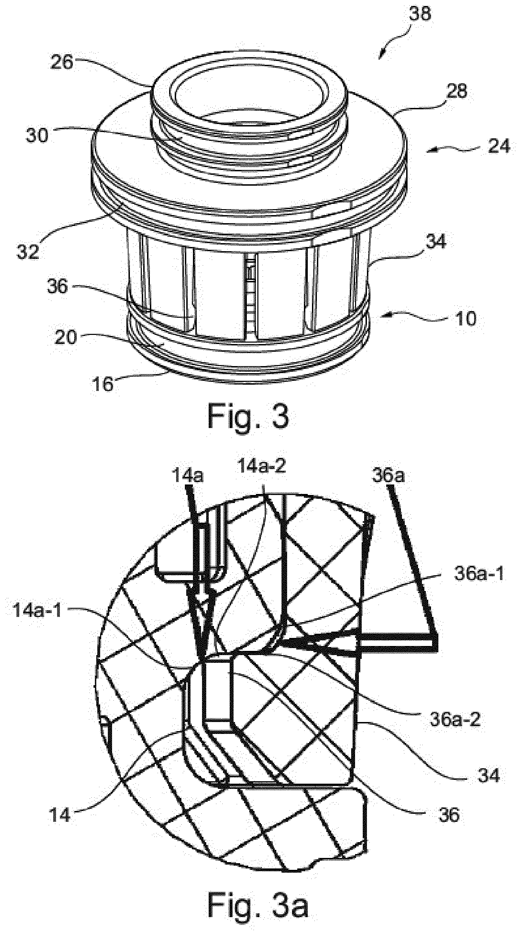

Fig. 3 shows an exemplary component 38 comprising the snap-fitted first and second tubular parts 10, 24. As can be seen from Fig. 3, the flexible arms 34 surround a portion of the first tubular part 10 and the snap-fits 36 extend into the circumferential groove 14. While the snap-fits 36 inhibit a relative movement between the first tubular part 10 and the second tubular part 24 in the axial direction, a relative movement between the first and second tubular parts 10, 24 in the radial direction is inhibited by the fins 40 that extend from the second ring-shaped section 18 of the first tubular part 10 into a space between neighboring arms 34.

As shown in Fig. 3a, the circumferential groove 14 may have a radially bent concave surface 14a with a rose-spike-like shape that has a first portion 14a-1 with a first curvature and a second portion 14a-2 with a second curvature, wherein the second curvature has a second radius that differs from a first radius of the first curvature. Similarly, a snap-fit 36 may have a radially bent concave surface 36a with a rose-spike-like shape that has a first portion 36a-1 with a third curvature and a second portion 36a-2 with a fourth curvature, wherein the fourth curvature has a fourth radius that differs from a third radius of the third curvature.

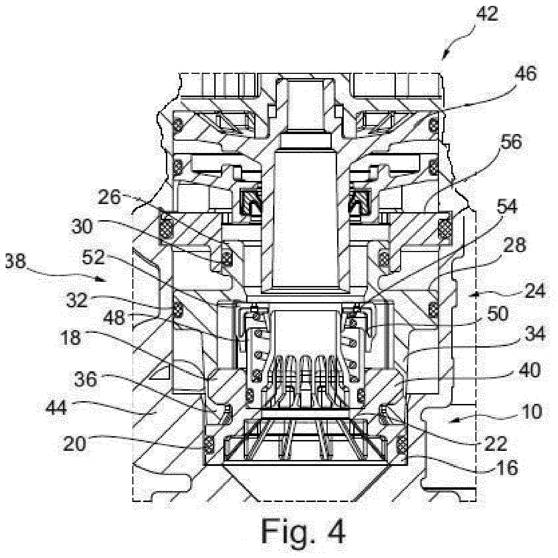

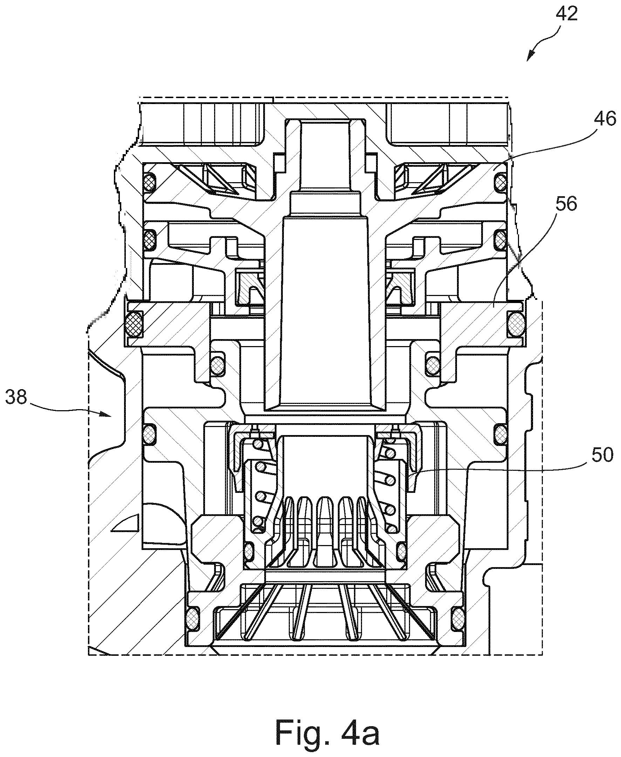

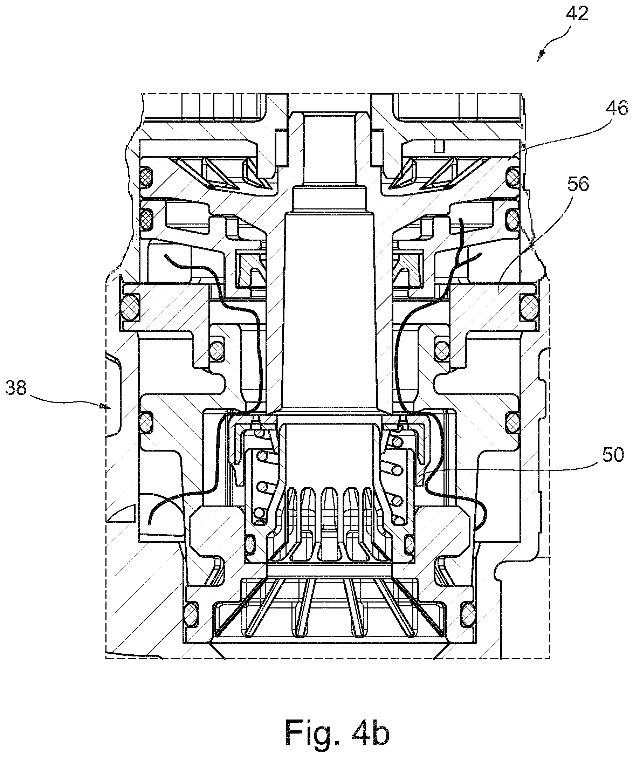

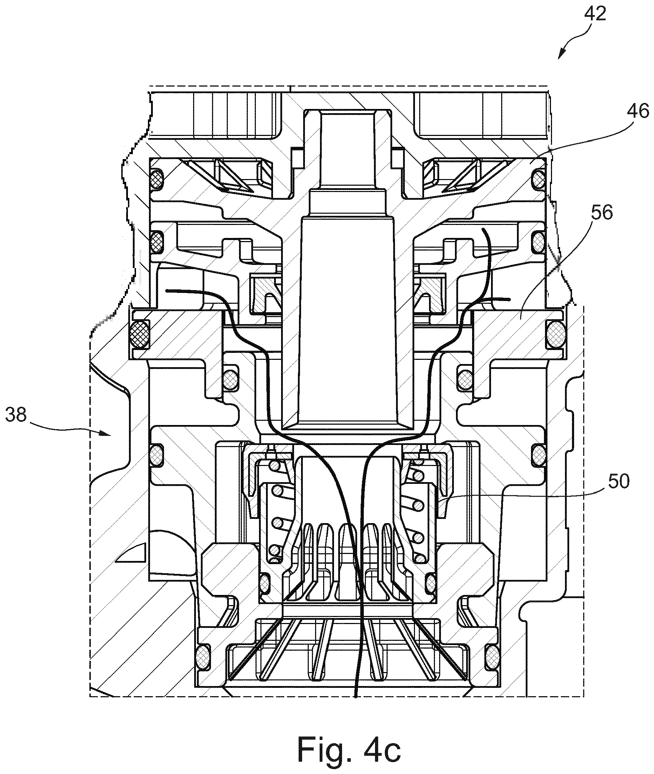

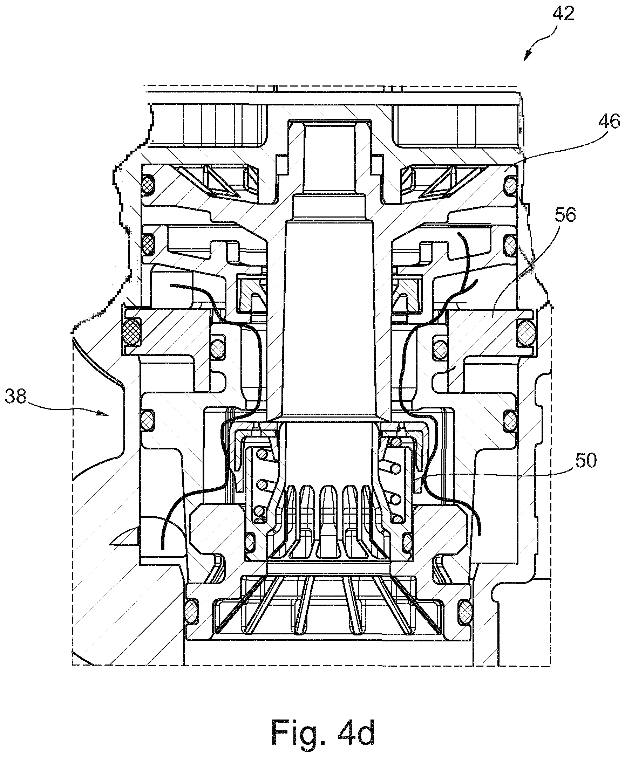

Fig. 4 shows a cross-sectional view of components of an exemplary brake control module 42 that comprises a housing 44 with a first piston 46 and a second piston 38. The second piston 38 comprises the snap-fitted first and second tubular parts 10, 34, wherein the snap-fits 36 are secured by the housing 44. The first tubular part 10 of the second piston 38 provides a support for a tubular element 48 of a telescopic structure 50. The telescopic structure 50 comprises a spring 54 embedded between said tubular element 48 and another tubular element 52 which is pressed (by the spring 54) against the second tubular part 24 of the second piston 38, thereby forming a plate valve.

As can be seen from Fig. 4a and Fig. 4b, the plate valve can be opened by actuating the first piston 46. For example, the module 42 may comprise an electro-pneumatic valve that feeds compressed air into the compartment above the first piston 46 to the effect that the first piston 46 is pushed downwards and opens the plate valve within the second piston 38 against the restoring force of the spring 54. In this embodiment, the spring 54, for instance, can be a cylindrical compression spring. When the plate valve is open, compressed air may flow to the brake control line as illustrated in Fig. 4b. By disengaging the plate valve and the first piston 38, as shown in Fig. 4c, compressed air can be exhausted from the brake control line through the tubular elements 48, 52.

For instance, when a parking brake is actuated, a space between the second piston 38 and a support structure 56 is evacuated such that the second piston 38 travels towards the first piston. As a result, the plate valve is opened by the first piston 46 and compressed air may flow to the brake control line, as illustrated in Fig. 4d. When the parking brake is released, compressed air is fed to the space between the second piston 38 and the support structure 56 to the effect that the second piston 38 is disengaged from the telescopic structure 50 and compressed air may be exhausted from the brake control line.

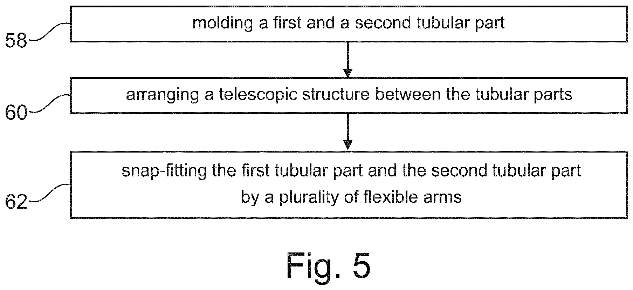

Fig. 5 shows a flow-chart of a method of manufacturing the second piston 38. The method starts at step 58 with molding the first tubular part 10 and the second tubular part 24. After molding, the telescopic structure 50 is arranged between the tubular parts 10, 24 in step 60. At step 62, the tubular parts 10, 24 are pushed together until the snap-fits 36 engage with the circumferential groove 14 that separates the first ring-shaped section 16 from the second ring-shaped section 18 of the first tubular part 10. As a result, the first tubular part 10 is snap-fitted to the second tubular part 24 by the flexible arms 34 that surround a portion of the first tubular part 10.

After assembling the second piston 38, the module 42 may be assembled by inserting the second piston 38, the support structure 56 and the first piston 46 into the housing 44. As shown in Fig. 4, the inner wall of the housing 44 may be stepped and the support structure 56 may, once inserted, come to rest on a step. The opening in the housing 44 through which the second piston 38, the support structure 56, and the first piston 46 are inserted, may then be closed by a cover which inhibits an axial movement of the support structure 56 towards the opening, such that the support structure cannot move along the axial direction during operation.

### List of Reference Numerals (Part of description)

- 10: first tubular part
- 12: outer wall
- 14: circumferential groove (for the snap-fits)
- 16: first ring-shaped section (of the first tubular part)
- 18: second ring-shaped section (of the first tubular part)
- 20: circumferential groove (for a piston seal)
- 22: neck
- 24: second tubular part
- 26: first ring-shaped section (of the second tubular part)
- 28: second ring-shaped section (of the second tubular part)
- 30: circumferential groove (for a piston seal)
- 32: circumferential groove (for a piston seal)
- 34: arm
- 34a: rib
- 34b: rib
- 36: snap fit
- 36a: concave surface
- 36a-1: first portion
- 36a-2: second portion
- 38: component/second piston
- 40: guide member/fin
- 42: module
- 44: housing
- 46: first piston
- 48: second tubular element (of the second piston)
- 50: telescopic structure
- 52: first tubular element (of the second piston)
- 54: spring
- 56: support structure
- 58: method step
- 60: method step
- 62: method step

## Claims

1. A pneumatic brake control module (42), comprising:
a housing (44) with:
a first inlet port for supplying compressed air to the module (42);
a first outlet port for feeding the compressed air to a brake control line;
a first piston (46) and a second piston (38) arranged within the housing (44) and movable relative to each other; and
a pneumatic valve for actuating the first piston (46), wherein:
the actuated first piston (46) opens a plate valve within the second piston (38) against a restoring force of a spring element, the open plate valve connecting the first inlet port and the first outlet port;
and
compressed air can be exhausted from the brake control line by disengaging the plate valve and the first piston (46);
wherein the second piston (38) comprises a first tubular part (10) and a second tubular part (24):
the first tubular part (10) providing a support for a telescopic structure (50) in which the spring element is embedded; and
the second tubular part (24) providing an end stop for a first tubular element (52) of the telescopic structure (50);
wherein the first tubular part (10) is snap-fitted to the second tubular part (24), **characterized in that** the first tubular part (10) of the second piston (38) comprises an outer wall (12) with a circumferential groove (14).

2. The pneumatic brake control module (42) of claim 1, further comprising extended guide members (40) rising from the first tubular part (10).

3. The pneumatic brake control module (42) of claim 1 or 2, wherein the housing (44) further comprises:
a support structure (56) provided between the first and second piston (46, 38); and
a second inlet port for parking brake control;
wherein compressed air fed to the second inlet port causes a motion of the second piston (38) relative to the support structure (56) to disengage the plate valve from the first piston (46), if the first piston (46) is not actuated by the pneumatic valve.

4. The pneumatic brake control module (42) of any one of claims 1 to 3, wherein the spring element is embedded between the first tubular element (52) and a second tubular element (48) of the telescopic structure (50), wherein the second tubular element (48) can be slid into the first tubular element (52) against the restoring force of the spring (54).

5. The pneumatic brake control module (42) of claim 4, wherein compressed air can be exhausted from the brake control line through the tubular elements (48, 52).

6. The pneumatic brake control (42) module of claim 1, wherein the circumferential groove (14) has a U-shaped profile.

7. The pneumatic brake control module (42) of claim 1 or 6, wherein the circumferential groove (14) has a radially bent concave surface (14a) with a rose-spike-like shape that has a first portion (14a-1) with a first curvature and a second portion (14a-2) with a second curvature, wherein the second curvature has a second radius that differs from a first radius of the first curvature.

8. The pneumatic brake control module (42) of any one of claims 1, 6 and 7, wherein the second tubular part (24) of the second piston (38) comprises a plurality of flexible arms (34) surrounding a portion of the first tubular part (10) of the second piston (38).

9. The pneumatic brake control module (42) of claim 8, further comprising first ribs (34a) provided behind the flexible arms (34).

10. The pneumatic brake control module (42) of claim 8 or 9, further comprising second ribs (34b) provided in between the flexible arms (34), wherein the second ribs (34b) are designed to be irreversibly deformed during assemblage to temporarily reduce mechanical stress.

11. The pneumatic brake control module (42) of any one of claims 8 to 10, wherein the flexible arms (34) comprise snap-fits (36) that extend into the circumferential groove (14).

12. The pneumatic brake control module (42) of claim 11, wherein the snap-fits (36) have a radially bent concave surface (36a) with a rose-spike-like shape that has a first portion (36a-1) with a third curvature and a second portion (36a-2) with a fourth curvature, wherein the fourth curvature has a fourth radius that differs from a third radius of the third curvature.

13. The pneumatic brake control module (42) of claim 11 or 12, wherein the housing (44) inhibits a movement of the snap-fits (36) in a radial direction.

14. The pneumatic brake control module (42) of any one of claims 1, and 6 to 13, wherein the first tubular part (10) of the second piston (38) comprises a first ring-shaped section (16) and a second ring-shaped section (18), wherein both ring-shaped sections (16, 18) are divided in an axial direction by the circumferential groove (14).

15. The pneumatic brake control module (42) of any one of claims 8 to 13, wherein the second tubular part (24) of the second piston (38) comprises:
a first ring-shaped section (26) extending into the support structure (56) provided between the first piston (46) and the second piston (38); and
a second ring-shaped section (28) having a larger diameter than said first ring-shaped section (26), wherein the housing (44) inhibits a radial movement of the second ring-shaped section (26).

16. The pneumatic brake control module (42) of claim 15, wherein a longitudinal axis of an arm (34) extends form said second ring-shaped section (28) in parallel to an/the axial direction.

17. A trailer control unit comprising the pneumatic brake control module as claimed in any one of claims 1 to 16.

18. A method of manufacturing a component (38) for a pneumatic brake control module (42), the method comprising:
molding a first tubular part (10);
molding a second tubular part (24);
arranging a telescopic structure (50) with an embedded spring element between the first tubular part (10) and the second tubular part (24),
wherein the first tubular part (10) provides a support for the telescopic structure (50) and the second tubular part (24) provides an end stop for a tubular element (52) of the telescopic structure (50); and
wherein the first tubular part (10) comprises an outer wall (12) with a circumferential groove (14), and
snap-fitting the first tubular part (10) to the second tubular part (24) by a plurality of flexible arms (34) that extend form a ring-shaped section (28) of the second tubular part (24) and surround a portion of the first tubular part (10).

## Patentansprüche

1. Druckluftbremsensteuermodul (42), umfassend:
ein Gehäuse (44) mit:
einem ersten Einlassanschluss zum Zuführen von komprimierter Luft zu dem Modul (42);
einem ersten Auslassanschluss zum Zuführen der komprimierten Luft zu einer Bremssteuerleitung;
einem ersten Kolben (46) und einem zweiten Kolben (38), die innerhalb des Gehäuses (44) angeordnet und relativ zueinander bewegbar sind; und
einem Druckluftventil zum Betätigen des ersten Kolbens (46), wobei:
der betätigte erste Kolben (46) ein Plattenventil innerhalb des zweiten Kolbens (38) gegen eine Rückstellkraft eines Federelements öffnet, wobei das offene Plattenventil den ersten Einlassanschluss und den ersten Auslassanschluss verbindet;
und
komprimierte Luft aus der Bremssteuerleitung ausgestoßen werden kann, durch ein Lösen des Plattenventils und des ersten Kolbens (46);
wobei der zweite Kolben (38) ein erstes rohrförmiges Teil (10) und ein zweites rohrförmiges Teil (24) umfasst:
wobei das erste rohrförmige Teil (10) eine Stütze für eine Teleskopstruktur (50) bereitstellt, in der das Federelement eingebettet ist; und wobei das zweite rohrförmige Teil (24) einen Endanschlag für ein erstes rohrförmiges Element (52) der Teleskopstruktur (50) bereitstellt;
wobei das erste rohrförmige Teil (10) an dem zweiten rohrförmigen Teil (24) eingerastet ist, **dadurch gekennzeichnet, dass**
das erste rohrförmige Teil (10) des zweiten Kolbens (38) eine Außenwand (12) mit einer Umfangsnut (14) umfasst.

2. Druckluftbremsensteuermodul (42) nach Anspruch 1, ferner umfassend erstreckte Führungselemente (40), die von dem ersten rohrförmigen Teil (10) aufsteigen.

3. Druckluftbremsensteuermodul (42) nach Anspruch 1 oder 2, wobei das Gehäuse (44) ferner umfasst:
eine Stützstruktur (56), die zwischen dem ersten und dem zweiten Kolben (46, 38) bereitgestellt ist; und
einen zweiten Einlassanschluss für eine Parkbremssteuerung;
wobei komprimierte Luft, die dem zweiten Einlassanschluss zugeführt wird, eine Bewegung des zweiten Kolbens (38) relativ zu der Stützstruktur (56) bewirkt, um das Plattenventil von dem ersten Kolben (46) zu lösen, falls der erste Kolben (46) nicht durch das Druckluftventil betätigt wird.

4. Druckluftbremsensteuermodul (42) nach einem der Ansprüche 1 bis 3, wobei das Federelement zwischen dem ersten rohrförmigen Element (52) und einem zweiten rohrförmigen Element (48) der Teleskopstruktur (50) eingebettet ist, wobei das zweite rohrförmige Element (48) gegen die Rückstellkraft der Feder (54) in das erste rohrförmige Element (52) verschiebbar ist.

5. Druckluftbremsensteuermodul (42) nach Anspruch 4, wobei komprimierte Luft aus der Bremssteuerleitung durch die rohrförmigen Elemente (48, 52) ausgestoßen werden kann.

6. Druckluftbremsensteuermodul (42) nach Anspruch 1, wobei die Umfangsnut (14) ein U-förmiges Profil aufweist.

7. Druckluftbremsensteuermodul (42) nach Anspruch 1 oder 6, wobei die Umfangsnut (14) eine radial gebogene konkave Oberfläche (14a) mit einer rosendornartigen Form aufweist, die einen ersten Abschnitt (14a-1) mit einer ersten Krümmung und einen zweiten Abschnitt (14a-2) mit einer zweiten Krümmung aufweist, wobei die zweite Krümmung einen zweiten Radius aufweist, der sich von einem ersten Radius der ersten Krümmung unterscheidet.

8. Druckluftbremsensteuermodul (42) nach einem der Ansprüche 1, 6 und 7, wobei das zweite rohrförmige Teil (24) des zweiten Kolbens (38) eine Vielzahl von flexiblen Armen (34) umfasst, die einen Abschnitt des ersten rohrförmigen Teils (10) des zweiten Kolbens (38) umgeben.

9. Druckluftbremsensteuermodul (42) nach Anspruch 8, ferner umfassend erste Rippen (34a), die hinter den flexiblen Armen (34) bereitgestellt sind.

10. Druckluftbremsensteuermodul (42) nach Anspruch 8 oder 9, ferner umfassend zweite Rippen (34b), die zwischen den flexiblen Armen (34) bereitgestellt sind, wobei die zweiten Rippen (34b) ausgelegt sind, um während der Montage irreversibel verformt zu werden, um eine mechanische Belastung vorübergehend zu reduzieren.

11. Druckluftbremsensteuermodul (42) nach einem der Ansprüche 8 bis 10, wobei die flexiblen Arme (34) Einrastverbindungen (36) umfassen, die sich in die Umfangsnut (14) erstrecken.

12. Druckluftbremsensteuermodul (42) nach Anspruch 11, wobei die Einrastverbindungen (36) eine radial gebogene konkave Oberfläche (36a) mit einer rosendornartigen Form aufweisen, die einen ersten Abschnitt (36a-1) mit einer dritten Krümmung und einen zweiten Abschnitt (36a-2) mit einer vierten Krümmung aufweist, wobei die vierte Krümmung einen vierten Radius aufweist, der sich von einem dritten Radius der dritten Krümmung unterscheidet.

13. Druckluftbremsensteuermodul (42) nach Anspruch 11 oder 12, wobei das Gehäuse (44) eine Bewegung der Einrastverbindungen (36) in einer radialen Richtung hemmt.

14. Druckluftbremsensteuermodul (42) nach einem der Ansprüche 1 und 6 bis 13, wobei das erste rohrförmige Teil (10) des zweiten Kolbens (38) einen ersten ringförmigen Bereich (16) und einen zweiten ringförmigen Bereich (18) umfasst, wobei beide ringförmigen Bereiche (16, 18) durch die Umfangsnut (14) in einer axialen Richtung unterteilt sind.

15. Druckluftbremsensteuermodul (42) nach einem der Ansprüche 8 bis 13, wobei das zweite rohrförmige Teil (24) des zweiten Kolbens (38) umfasst:
einen ersten ringförmigen Bereich (26), der sich in die Stützstruktur (56) erstreckt, die zwischen dem ersten Kolben (46) und dem zweiten Kolben (38) bereitgestellt ist; und
einen zweiten ringförmigen Bereich (28), der einen größeren Durchmesser als der erste ringförmige Bereich (26) aufweist, wobei das Gehäuse (44) eine radiale Bewegung des zweiten ringförmigen Bereichs (26) hemmt.

16. Druckluftbremsensteuermodul (42) nach Anspruch 15, wobei sich eine Längsachse eines Arms (34) von dem zweiten ringförmigen Bereich (28) parallel zu einer/der axialen Richtung erstreckt.

17. Anhängersteuereinheit, umfassend das Druckluftbremsensteuermodul nach einem der Ansprüche 1 bis 16.

18. Verfahren zum Herstellen einer Komponente (38) für ein Druckluftbremsensteuermodul (42), das Verfahren umfassend:
Formen eines ersten rohrförmigen Teils (10);
Formen eines zweiten rohrförmigen Teils (24);
Anordnen einer Teleskopstruktur (50) mit einem eingebetteten Federelement zwischen dem ersten rohrförmigen Teil (10) und dem zweiten rohrförmigen Teil (24), wobei das erste rohrförmige Teil (10) eine Stütze für die Teleskopstruktur (50) bereitstellt und das zweite rohrförmige Teil (24) einen Endanschlag für ein rohrförmiges Element (52) der Teleskopstruktur (50) bereitstellt; und
wobei das erste rohrförmige Teil (10) eine Außenwand (12) mit einer Umfangsnut (14) umfasst, und
Einrasten des ersten rohrförmigen Teils (10) mit dem zweiten rohrförmigen Teil (24) durch eine Vielzahl von flexiblen Armen (34), die sich durch einen ringförmigen Bereich (28) des zweiten rohrförmigen Teils (24) erstrecken und einen Abschnitt des ersten rohrförmigen Teils (10) umgeben.

## Revendications

1. Module de commande de frein pneumatique (42), comprenant :
un logement (44) avec :
un premier port d'entrée pour fournir de l'air comprimé au module (42) ;
un premier port de sortie pour introduire de l'air comprimé dans une ligne de commande de frein ;
un premier piston (46) et un second piston (38) disposés à l'intérieur du logement (44) et mobiles l'un par rapport à l'autre ; et
une soupape pneumatique pour actionner le premier piston (46), dans lequel :
le premier piston (46) actionné ouvre une soupape à plaque à l'intérieur du second piston (38) contre une force de rappel d'un élément ressort, la soupape à plaque ouverte reliant le premier port d'entrée et le premier port de sortie ;
et
l'air comprimé peut être évacué de la ligne de commande de frein en dégageant la soupape à plaque et le premier piston (46) ;
dans lequel le second piston (38) comprend une première pièce tubulaire (10) et une seconde pièce tubulaire (24) :
la première pièce tubulaire (10) fournissant un support pour une structure télescopique (50) dans laquelle l'élément ressort est incorporé ; et la seconde pièce tubulaire (24) fournissant une butée d'arrêt pour un premier élément tubulaire (52) de la structure télescopique (50) ;
dans lequel la première pièce tubulaire (10) est encliquetée sur la seconde pièce tubulaire (24), **caractérisé en ce que**
la première pièce tubulaire (10) du second piston (38) comprend une paroi externe (12) avec une rainure circonférentielle (14).

2. Module de commande de frein pneumatique (42) selon la revendication 1, comprenant en outre des organes de guidage étendus (40) s'élevant à partir de la première pièce tubulaire (10).

3. Module de commande de frein pneumatique (42) selon la revendication 1 ou 2, dans lequel le logement (44) comprend en outre :
une structure de support (56) prévue entre le premier et le seconde pistons (46, 38) ; et
un second port d'entrée pour la commande du frein de stationnement ;
dans lequel l'air comprimé introduit dans le second port d'entrée provoque un mouvement du second piston (38) par rapport à la structure de support (56) pour dégager la soupape à plaque du premier piston (46), si le premier piston (46) n'est pas actionné par la soupape pneumatique.

4. Module de commande de frein pneumatique (42) selon l'une quelconque des revendications 1 à 3, dans lequel l'élément ressort est incorporé entre le premier élément tubulaire (52) et un second élément tubulaire (48) de la structure télescopique (50), dans lequel le second élément tubulaire (48) peut être coulissé dans le premier élément tubulaire (52) contre la force de rappel du ressort (54).

5. Module de commande de frein pneumatique (42) selon la revendication 4, dans lequel l'air comprimé peut être évacué de la ligne de commande de frein à travers les éléments tubulaires (48, 52).

6. Module de commande de frein pneumatique (42) selon la revendication 1, dans lequel la rainure circonférentielle (14) présente un profil en U.

7. Module de commande de frein pneumatique (42) selon la revendication 1 ou 6, dans lequel la rainure circonférentielle (14) présente une surface concave courbée radialement (14a) avec une forme en forme d'épine de rose qui présente une première partie (14a-1) avec un première courbure et une seconde partie (14a-2) avec une deuxième courbure, dans lequel la deuxième courbure présente un deuxième rayon qui diffère d'un premier rayon de la première courbure.

8. Module de commande de frein pneumatique (42) selon l'une quelconque des revendications 1, 6 et 7, dans lequel la seconde pièce tubulaire (24) du second piston (38) comprend une pluralité de bras flexibles (34) entourant une partie de la première pièce tubulaire (10) du second piston (38).

9. Module de commande de frein pneumatique (42) selon la revendication 8, comprenant en outre des premières nervures (34a) prévues derrière les bras flexibles (34).

10. Module de commande de frein pneumatique (42) selon la revendication 8 ou 9, comprenant en outre des secondes nervures (34b) prévues entre les bras flexibles (34), dans lequel les secondes nervures (34b) sont conçues pour être déformées de manière irréversible pendant l'assemblage afin de réduire les contraintes mécaniques temporairement.

11. Module de commande de frein pneumatique (42) selon l'une quelconque des revendications 8 à 10, dans lequel les bras flexibles (34) comprennent des attaches à encliquetage (36) qui s'étendent dans la rainure circonférentielle (14).

12. Module de commande de frein pneumatique (42) selon la revendication 11, dans lequel les attaches à encliquetage (36) présentent une surface concave courbée radialement (36a) avec une forme en forme d'épine de rose qui présente une première partie (36a-1) avec une troisième courbure et une seconde partie (36a-2) avec une quatrième courbure, dans lequel la quatrième courbure présente un quatrième rayon qui diffère d'un troisième rayon de la troisième courbure.

13. Module de commande de frein pneumatique (42) selon la revendication 11 ou 12, dans lequel le logement (44) empêche un mouvement des attaches à encliquetage (36) dans une direction radiale.

14. Module de commande de frein pneumatique (42) selon l'une quelconque des revendications 1, et 6 à 13, dans lequel la première pièce tubulaire (10) du second piston (38) comprend une première section en forme d'anneau (16) et une seconde section en forme d'anneau (18), dans lequel les deux sections en forme d'anneau (16, 18) sont divisées dans une direction axiale par la rainure circonférentielle (14).

15. Module de commande de frein pneumatique (42) selon l'une quelconque des revendications 8 à 13, dans lequel la seconde pièce tubulaire (24) du second piston (38) comprend :
une première section en forme d'anneau (26) s'étendant dans la structure de support (56) prévue entre le premier piston (46) et le second piston (38) ; et
une seconde section en forme d'anneau (28) présentant un diamètre plus grand que ladite première section en forme d'anneau (26), dans lequel le logement (44) empêche un mouvement radial de la seconde section en forme d'anneau (26).

16. Module de commande de frein pneumatique (42) selon la revendication 15, dans lequel un axe longitudinal d'un bras (34) s'étend depuis ladite seconde section en forme d'anneau (28) parallèlement à une/la direction axiale.

17. Unité de commande de remorque comprenant le module de commande de frein pneumatique selon l'une quelconque des revendications 1 à 16.

18. Procédé de fabrication d'un composant (38) pour un module de commande de frein pneumatique (42), le procédé comprenant :
le moulage d'une première pièce tubulaire (10) ;
le moulage d'une seconde pièce tubulaire (24) ;
la disposition d'une structure télescopique (50) avec un élément de ressort incorporé entre la première pièce tubulaire (10) et la seconde pièce tubulaire (24), dans lequel la première pièce tubulaire (10) fournit un support pour la structure télescopique (50) et la seconde pièce tubulaire (24) fournit une butée d'arrêt pour un élément tubulaire (52) de la structure télescopique (50) ; et
dans lequel la première pièce tubulaire (10) comprend une paroi externe (12) avec une rainure circonférentielle (14), et
l'encliquetage de la première pièce tubulaire (10) sur la seconde pièce tubulaire (24) par une pluralité de bras flexibles (34) qui s'étendent depuis une section en forme d'anneau (28) de la seconde pièce tubulaire (24) et entourent une partie de la première pièce tubulaire (10).
